# EUROPEAN PATENT APPLICATION

(11) **EP 4 180 927 A1**
(43) Date of publication of application: **17.05.2023**
(21) Application number: 21846550.8
(22) Date of filing: 17.06.2021
(51) Int. Cl.: G06F 3/0481

(54) **INFORMATION DISPLAY METHOD, ELECTRONIC DEVICE AND STORAGE MEDIUM**

(30) Priority: 23.07.2020 CN 202010715859
(71) Applicant: GUANGDONG OPPO MOBILE TELECOMMUNICATIONS CORP., LTD., Dongguan, Guangdong 523860 (CN)
(72) Inventor: SI, Junfeng, Dongguan, Guangdong 523860 (CN)
(74) Representative: Manitz Finsterwald Patent- und Rechtsanwaltspartnerschaft mbB
(86) International application number: PCT/CN2021/100693
(87) International publication number: WO 2022/017090

(57) **Abstract**

Disclosed is an information display method. The method comprises: presenting a first page view, wherein the first page view comprises at least one first page; in response to a switching operation for the first page view, switching from the first page view to a second page view, wherein the second page view comprises at least one second page associated with the at least one first page; and presenting the second page view, wherein the number of pages displayed in the presented second page view is different from the number of pages displayed in the presented first page view. Further disclosed are an electronic device and a storage medium.

## Description

### CROSS REFERENCE TO RELATED APPLICATIONS

The present disclosure claims priority to Chinese Patent Application No. 202010715859.6 filed with China National Intellectual Property Administration on July 23, 2020, titled "INFORMATION DISPLAY METHOD, ELECTRONIC DEVICE, AND STORAGE MEDIUM", the content of which is herein incorporated by reference in its entirety.

### TECHNICAL FIELD

The present disclosure relates to but not limited to a field of computer technologies, and in particular to an information display method, an electronic device, and a storage medium.

### BACKGROUND

At present, with a rapid development of network technology, in this era of network information explosion, we can't live without network and electronic devices. Through the network and the electronic devices, we can read news, shop and socialize without leaving home. Browsing pages is one of the indispensable operations in the process of using electronic devices.

At present, a page view includes multiple pages, and an operator of an electronic device can browse contents of different pages by sliding page by page.

### SUMMARY

An information display method, an electronic device and a storage medium are aimed to be provided in embodiments of the present disclosure.

The technical solutions of the present disclosure are achieved in following.

An information display method is provided, and includes: presenting a first page view, the first page view includes at least one first page; in response to a switching operation for the first page view, switching from the first page view to a second page view, the second page view includes at least one second page associated with the at least one first page; presenting the second page view, the number of pages displayed in the presented second page view is different from the number of pages displayed in the presented first page view.

An information display apparatus is provided, and includes: a display unit, a process unit, and a display unit. The display unit is configured to present a first page view, and the first page view including at least one first page; the process unit is configured to: in response to a switching operation for the first page view, switch from the first page view to a second page view, the second page view including at least one second page associated with the at least one first page. The display unit is further configured to present the second page view, the number of pages displayed in the presented second page view being different from the number of pages displayed in the presented first page view.

An electronic device is provided, and includes a processor, a memory, and a communication bus. The communication bus is configured to achieve a communication connection between the processor and the memory; the processor is configured to execute an information display program stored in the memory to perform the operations of the information display method mentioned above.

A storage medium storing one or more programs is provided, the one or more programs are executed by one or more processors to perform the operations of the information display method mentioned above.

In the information display method, the electronic device and the storage medium provided in embodiments of the present disclosure, the following operations are included: presenting a first page view, the first page view includes at least one first page; in response to a switching operation for the first page view, switching from the first page view to a second page view, the second page view includes at least one second page associated with the at least one first page; presenting the second page view, the number of pages displayed in the presented second page view is different from the number of pages displayed in the presented first page view. Accordingly, the embodiments of the present disclosure can achieve instantly switch between page views including different number of pages based on the switching operation for page view.

### BRIEF DESCRIPTION OF THE DRAWINGS

FIG. 1 is a first flowchart of an information display method according to some embodiments of the present disclosure.
FIG. 2 is a second flowchart of an information display method according to some embodiments of the present disclosure.
FIG. 3 is a schematic view of information display interfaces (a) and (b) according to some embodiments of the present disclosure.
FIG. 4 is a third flowchart of an information display method according to some embodiments of the present disclosure.
FIG. 5 is a schematic view of information display interfaces (a) and (b) according to some embodiments of the present disclosure.
FIG. 6 is a structural schematic view of an information display apparatus according to some embodiments of the present disclosure.
FIG. 7 is a structural schematic view of an electronic device according to some embodiments of the present disclosure.

### DETAILED DESCRIPTION

In order to make the purpose, technical solutions and advantages of the present disclosure clearer, the following will be described in further detail in conjunction with drawings, the described embodiments should not be regarded as a limitation of the present disclosure, for those skilled in the art, other drawings may be acquired according to the drawings without any creative work.

A term "some embodiments" in following description describe a subset of all possible embodiments, but it is understood that "some embodiments" may be the same subset or a different subset of all possible embodiments, and may be combined with each other without conflict.

In the following description, terms "first/second/third" are used only to distinguish similar objects and do not represent a specific order for the objects, and it is understood that the terms "first/second/third" may be interchanged in a specific order or sequence so that the embodiments of the present disclosure described can be implemented in an order other than the order or sequence described in the drawings and specification.

Unless otherwise defined, all technical and scientific terms used herein have same meaning as commonly understood by those skilled in the art belonging to the present disclosure. The terms used herein are for the purpose of describing embodiments of the present disclosure only and are not intended to limit the present disclosure.

At present, a page view includes multiple pages, and an operator of an electronic device can browse contents of different pages by sliding page by page. There is at least one problem that the browse mode is single and can not satisfied with a need of the user, thereby causing a bad browse effect.

An information display method is provided in the present disclosure. The method may include following operations.

The method may include: presenting a first page view, the first page view including at least one first page.

The method may include: in response to a switching operation for the first page view, switching from the first page view to a second page view, the second page view includes at least one second page associated with the at least one first page.

The method may include: presenting the second page view, the number of pages displayed in the presented second page view is different from the number of pages displayed in the presented first page view.

In the method mentioned above, the in response to a switching operation for the first page view, switching from the first page view to a second page view may include following operations.

The method may include: in response to the switching operation, acquiring an image set, the image set including a multi-frame image acquired by converting the at least one first page to the at least one second page.

The method may include: previewing the image set switching and presenting the second page view when finishing previewing a last frame image in the image set.

In the method mentioned above, the in response to the switching operation, acquiring an image set may include following operations.

The method may include: in response to the switching operation, zooming the at least one first page, and simultaneously moving the zoomed at least one first page to acquire the image set.

The at least one second page is the zoomed at least one first page, the zoomed first page may include some elements of the first page before zooming, or the first page before zooming may include some elements of the zoomed first page.

In the method mentioned above, the zoomed first page may include some elements of the first page before zooming, after presenting the second page view, the method may include following operations.

The method may include: in response to an expansion operation for a target second page in a plurality of second pages, switching from the second page view to the first page view.

The method may include: presenting the first page view and displaying the first page associated with the target second page in the first page view.

In the method mentioned above, a first position in the presented second page view may be configured to display the target second page, a candidate position in the presented second page view may be configured to display a candidate second page. The candidate second page may include pages different from the target second page in the plurality of second pages.

The target second page in the plurality of the second pages may be a page associated with the first page displayed in a second position in the first page view before switching.

The larger an associated coefficient between the candidate second page and the target second page is, the smaller a distance between the candidate position corresponding to the candidate second page and the first position is.

In the method mentioned above, the presenting the second page view may include following operations.

The method may include: presenting the second page view, and displaying a frame selection identification in the first position in the second page view, the frame selection identification may be configured to indicate that the second page in the first position is in a selected state.

In the method mentioned above, the number of pages displayed in the presented second page view may be more than the number of pages displayed in the presented first page view, the first position in the second page view may be different from a top position in the second page view.

After presenting the second page view, the method may further include following operations.

The method may include: in response to a page turning operation for the plurality of second pages in the second page view, moving the plurality of second pages, and displaying the frame selection identification in a third position in the second page view. The frame selection identification may be configured to indicate that the second page in the third position is in a selected state.

In the method mentioned above, the frame selection identification and the selected second page may have same contour boundaries. After displaying the frame selection identification in the third position in the second page view, the method may further include following operations.

The method may include: determining the third position as a top position or a bottom position in the second page view, receiving the page turning operation, and keeping a position of the frame selection identification in the second page view unchanged.

In the method mentioned above, a first control may be displayed in the first page view, and the first control may be configured to change the first page displayed in the second position in the first page view.

A second control may be displayed in the second page view, and the second control may be configured to change the second page displayed in the first position in the second page view.

A position of the first control in the first page view and a position of the second control in the second page view may have a mapping relationship, and the first page displayed in the second position and the second page displayed in the first position may have an association relationship.

An information display apparatus is provided in the present disclosure.

The information display apparatus may include a display unit configured to present a first page view, and the first page view may include at least one first page.

The information display apparatus may include a process unit configured to: in response to a switching operation for the first page view, switch from the first page view to a second page view, the second page view includes at least one second page associated with the at least one first page.

The display unit is further configured to present the second page view, and the number of pages displayed in the presented second page view is different from the number of pages displayed in the presented first page view.

In the information display apparatus mentioned above, the process unit may be configured to: in response to the switching operation, acquire an image set, the image set include a multiple-frame image acquired by converting the at least one first page to the at least one second page.

The display unit may be further configured to: preview the image set, switch and present the second page view when finishing previewing a last frame image in the image set.

In the information display apparatus mentioned above, the process unit may be configured to: in response to the switching operation, zoom the at least one first page, and simultaneously move the zoomed at least one first page to acquire the image set.

The at least one second page may be the zoomed at least one first page, the zoomed first page may include some elements of the first page before zooming, or the first page before zooming may include some elements of the zoomed first page.

In the information display apparatus mentioned above, the process unit may be further configured to: in response to an expansion operation for a target second page in a plurality of second pages, switch from the second page view to the first page view.

The display unit may be further configured to: present the first page view and display the first page associated with the target second page in the first page view.

In the information display apparatus mentioned above, a first position in the presented second page view may be configured to display the target second page, a candidate position in the presented second page view is configured to display a candidate second page. The candidate second page may include a page different from the target second page in the plurality of the second pages.

The target second page in the plurality of the second pages may be a page associated with the first page displayed in a second position in the first page view before switching.

The larger an associated coefficient between the candidate second page and the target second page is, the smaller a distance between the candidate position corresponding to the second page and the first position is.

In the information display apparatus mentioned above, the display unit may be further configured to: present the second page view, and display a frame selection identification in the first position in the second page view, the frame selection identification may be configured to indicate that the second page in the first position is in a selected state.

In the information display apparatus mentioned above, the number of pages displayed in the presented second page view may be more than the number of pages displayed in the presented first page view, the first position in the second page view may be different from a top position in the second page view.

The process unit may be further configured to: in response to a page turning operation for the plurality of second pages in the second page view, move the plurality of second pages.

The display unit may also be configured to: display the frame selection identification in a third position in the second page view. The frame selection identification may be configured to indicate that the second page in the third position is in a selected state.

In the information display apparatus mentioned above, the frame selection identification and the selected second page may have same contour boundaries. After displaying the frame selection identification in the third position in the second page view, the device may be further configured to following operations.

The device may be further configured to: determine the third position as a top position or a bottom position in the second page view, receive the page turning operation, and keep a position of the frame selection identification in the second page view unchanged.

In the information display apparatus mentioned above, a first control may be displayed in the first page view, and the first control may be configured to change the first page displayed in the second position in the first page view.

A second control may be displayed in the second page view, and the second control may be configured to change the second page displayed in the first position in the second page view.

A position of the first control in the first page view and a position of the second control in the second page view may have a mapping relationship, and the first page displayed in the second position and the second page displayed in the first position may have an association relationship.

An electronic device is provided in the present disclosure, and includes a processor, a memory, and a communication bus.

The communication bus may be configured to achieve a communication connection between the processor and the memory.

The processor may be configured to execute an information display program stored in the memory, thereby performing the operations of the information display method mentioned above.

A storage medium storing one or more programs is provided in the present disclosure, the one or more programs may be executed by one or more processors, thereby performing the operations of the information display method mentioned above.

Before further describing the embodiments of the present disclosure, terms in some embodiments of the present disclosure are explained in the following.
1) A Scroll list means a list that can be continuous slid.
2) A Page View means a view including at least one page, the page can be browsed by turning.
3) A Scroll View means a view including at least one page, the page can be and browsed by scrolling, and the page can be scrolled horizontally or vertically.

In some embodiments of the present disclosure, the Page View and the Scroll View are user interface (UI) controls displaying data flow.

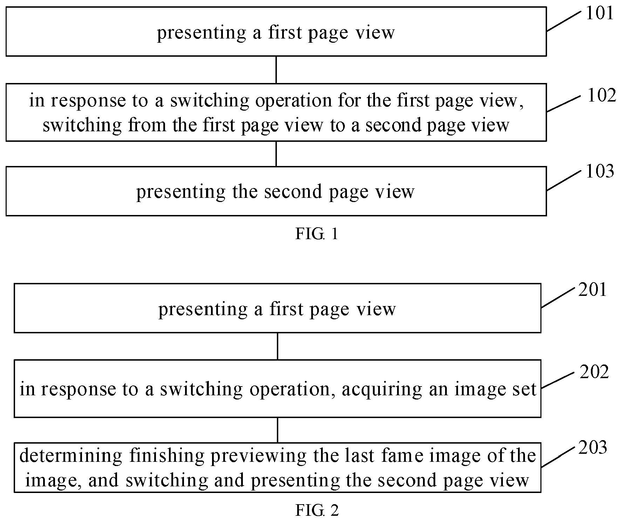

An information display method is provided in some embodiments of the present disclosure, and the method may be performed by an electronic device. As shown in FIG. 1, the method may include following operations.

At operation 101, the method may include presenting a first page view.

The first page view may include at least one first page.

In some embodiments of the present disclosure, the electronic device may include a mobile terminal device such as a mobile phone, a tablet, a laptop, a personal digital assistant (PDA), a camera, a portable game console, and a wearable, etc. The electronic device may also include a fixed terminal device such as a desktop and computer, etc.

At operation 102, the method may include: in response to a switching operation for the first page view, switching from the first page view to a second page view.

The second page view includes at least one second page associated with the at least one first page.

The second page view and the first page view may be different page views corresponding to a same application (APP) of the electronic device. The second page view and the first page view may also be different page views corresponding to an APP store of the electronic device, and the APP store may include all APPs installed in the electronic device. It should be noted that, whether second page view and the first page view are different page views corresponding to the same APP of the electronic device or the second page view and the first page view are different page views corresponding to the APP store of the electronic device, the first page view and the second page view include a plurality of pages. In response to a display control operation for a page of a page view of the electronic device, each of the plurality of pages may be displayed in a display unit of the electronic device. A difference is that the number of pages of the first page view simultaneously displayed in the display unit of the electronic device is different from the number of pages of the second page view simultaneously displayed in the display unit of the electronic device.

For example, When the second page view and the first page view are different page views corresponding to a same APP of the electronic device, the APP may be read APP, instant communication APP, and office APP, etc.

In some embodiments of the present disclosure, the switching operation may include an operation that an operator of the electronic device presses a physical button of the electronic device, and/or touches a virtual button of the electronic device.

In other embodiments of the present disclosure, the switching operation may include: the operator of the electronic device performing a specific gesture operation, and then the electronic device acquiring the specific gesture operation.

In other embodiments of the present disclosure, the switching operation may include: an operation that the operator of the electronic device pressing and/or touches a target region on the display unit of the electronic device. For example, the operator of the electronic device may perform a sliding operation by multiple fingers on the target region in the display unit of the electronic device.

Of course, in other embodiments of the present disclosure, the switching operation may also include other operations such as a voice operation, which is not limited in some embodiments of the present disclosure.

At operation 103, the method may include presenting the second page view.

The number of pages presented in the first page view may be different from the number of pages presented in the second page view.

In some embodiments of the present disclosure, the electronic device may present the first page view and the second page view on the display unit of the electronic device. The electronic device may also project the first page view and the second page view on a projection unit of the electronic device, and then the first page view and the second page view may be displayed in a project plane.

For example, the number of pages on the presented second page view being smaller than the number of pages on the presented first page view is taken as an example, the information method of the present disclosure is described. The Page View may indicate the first page view, and the Scroll View may indicate the second page view. The Page View and the Scroll View may page views corresponding to the APP store. In a first display mode, the electronic device may present the Page View, and the presented Page View may display a first page corresponding to a first APP. Of course, the Page View may also include other first pages corresponding to other APPs different from the first APP. In response to the display control operation for the Page View such as a page turning operation of the electronic device, the presented Page View of the electronic device displays a first page corresponding to a second APP, and the second APP is another APP different from the first APP. Further, in response to the switching operation for the Page View, the electronic device switches from the Page View to the Scroll View, presents the Scroll View displaying a plurality of second pages., and switches to another display mode and displays a second page corresponding to the APP store. In the method, the number of pages of the Scroll View may be equal to the number of pages of the Page View, but the number of pages of the Scroll View simultaneously presented on the display unit of the electronic device or simultaneously projected by the project unit every time larger than the number of pages of the Page View simultaneously presented on the display unit of the electronic device or simultaneously projected by the project unit. Two pages with an association relationship in the Scroll View and the Page View may have a sharing element, and the sharing element may include but not limited to at least one of a name of APP, a key word of brief introduction of APP, an icon of APP, and a function control of APP. In this way, after a page view is switched, the operator of the electronic device can quickly recognize a related page based on the sharing element, and the related page is in a switched page view and related to the first page before switching.

The information display method in embodiments of the present disclosure may include: presenting a first page view, the first page view includes at least one first page; in response to a switching operation for the first page view, switching from the first page view to a second page view, the second page view includes at least one second page associated with the at least one first page; and presenting the second page view, wherein the number of pages displayed in the presented second page view is different from the number of pages displayed in the presented first page view. The method can solve at least one problem in the related art that a browse mode is single and can not satisfied with a need of a user, thereby causing a bad browse effect. The method can achieve instantly switch between page views including different number of pages based on the switching operation for page view. That is, a flexible switch between different browse modes can satisfy a browse need of the user, improve visual experience, and increase browse efficiency.

In other embodiments of the present disclosure, a first position in the second page view presented on the electronic device may be configured to display a target second page, a candidate position in the presented second page view may be configured to display a candidate second page. The candidate second page may include a page different from the target second page in a plurality of the second pages. The target second page in the plurality of the second pages may be a page associated with the first page displayed in a second position in the first page view before switching.

The plurality of the second pages in the second page view may be arranged in order, a plurality of first page in the first page view may be arranged in disorder.

In some embodiments of the present disclosure, in response to the switching operation for the first page view, the electronic device presents the second page view, and presents a plurality of second pages in the second page view based on different positions in the second page view of the electronic device. Further, the first position in the second page view of the electronic device may display the target second page, and the candidate position in the second page view may display the candidate second page. In this way, in a case of switching a page view display mode, the target second page related to the first page displayed in the second position in the first page view before switching is displayed in the first position in the second page view, thereby being conducive for the user to quickly locate a browsed position before switching after the user switches to the browse mode in a process of browsing.

In other embodiments of the present disclosure, the larger an associated coefficient between the candidate second page and the target second page is, the smaller a distance between the candidate position corresponding to the second page and the first position is.

In response to the switching operation for the first page view, the electronic device presents the second page view, and simultaneously sorts the candidate position corresponding to the plurality of candidate second pages based on the associated coefficient between a plurality of candidate second pages and the target second page. The larger the associated coefficient between the candidate second page and the target second page is, the smaller a distance between the candidate position corresponding to the second page and the first position is. In this way, in a case that the user browses a first page corresponding to a target APP based on a presented first page view and performs the switching operation, in response to the switching operation, the electronic device switches from the first page view to the second page view, presents the second page view, and displays the second page corresponding to the target APP in the first position in the second page view. Second pages corresponding to other APPs are orderly displayed according to a distance from near to far from the first position in the candidate position. The larger an associated coefficient between the other APPs and the target APP is, the smaller a distance between the other APPs and the first position is. The display method makes a content that the user likes display in a centralized manner and ensures that a switched page provides good visual browsing experience.

The Page View being switched to the Scroll View is taken as an example, a plurality of second pages in the Scroll View may be arranged in order. For example, the Page View displays a first page corresponding to a first instant communication APP, therefore, a first position such as a top position in the Scroll View displays a second page corresponding to the first instant communication APP, a candidate position in the Scroll View, i.e., other positions in the Scroll View orderly presents various second pages according to an association from high to low with first instant communication APP. Of course, the method may also include switching from the Scroll View to the Page View, that is, one page is displayed in the Page View. In the switched Page View, in response to a display control operation such as a page turning operation for a page in the Page View of the electronic device, a first page corresponding to the second instant communication APP is displayed in the presented Page View of the electronic device, thereby achieving a centralized display of associated APP pages and improving a browsing experience.

An information display method performed by an electronic device in some embodiments of the present disclosure. As shown in FIG. 2, the method may include following operations.

At operation 201, the method may include presenting a first page view.

The first page view may include at least one first page.

At the operation 202, the method may include: in response to a switching operation, acquiring an image set.

The image set may include a multi-frame image acquired by converting the at least one first page to the at least one second page.

In some embodiments of the present disclosure, the image set may be taken as a property animation example in a process of view switching, and may be previewed in a display unit of the electronic device. In a process of previewing the image set, a first frame image to a last frame image may be previewed in a chronological order. In a case that the image set can be previewed in the display unit of the electronic device, in response to finishing previewing the last frame image of the image set, the electronic device switches and displays the second page view, thereby achieving a smooth switch from the first page view to the second page view.

At operation 203, the method may include: determining finishing previewing the last fame image of the image, and switching and presenting the second page view.

The second page view includes at least one second page associated with the at least one first page.

The number of pages displayed in the presented second page view is different from the number of pages displayed in the presented first page view.

In some embodiments, the operation 203 of in response to a switching operation, acquiring an image set can be implemented via following operations: in response to the switching operation, zooming at least one first page, and moving a zoomed at least one first page to acquire the image set.

At least one second page may be the zoomed at least one first page, the zoomed first page may include some elements of the first page before zooming, or the first page before zooming may include some elements of the zoomed first page. That is to say, the first page and the second page related to the first page have a sharing element.

The number of the first pages simultaneously displayed in the display region of the display unit of the electronic device may be determined by a size of the first page. Similarly, the number of the second pages simultaneously displayed in the display region of the display unit of the electronic device may be determined by a size of the second page.

For example, a size of a page in the Page View may be larger than a size of a page in the Scroll View. Switching from the Page View to the Scroll View is taken an example, in a case of presenting the Page View, in response to the switching operation for the Page View, the electronic device narrows various first pages in the Page View and simultaneously moves narrowed various first pages to acquire the image set. Further, the electronic device previews the image set, determines finishing previewing the last frame image of the image set, and switches and presents the Scroll View. At this time, the second page in the presented Scroll View may include some elements of the first page before narrowing in the Page View.

For another example, switching from the Scroll View to the Page View is taken an example, in a case of presenting the Scroll View, in response to the switching operation for the Scroll View, the electronic device enlarges various first pages in the Page View and moves enlarged various first pages to acquire the image set. Further, the electronic device previews the image set, determines finishing previewing the last frame image of the image set, and switches and presents the Page View. At this time, the second page in the presented Page View may include some elements of the first page before enlarging in the Scroll View.

In some embodiments of the present disclosure, in a case that the zoomed first page includes some elements of the first page before zooming, after the electronic device performs the operation of presenting the second page view at the operation 203, the electronic device may also perform following operations to switch from the second page view to the first page view.

Firstly, the operations may include: in response to an expansion operation for a target second page in the plurality of second pages, switching from the second page view to the first page view.

In response to the switching operation for the first page view, the electronic device switches from the first page view to the second page view, and then presents the second page view. Further, in a case that the zoomed first page includes some elements of the first page before zooming, in response to the expansion operation for the target second page in the plurality of second pages, switching from the second page view to the first page view.

For example, switching from the Page View to the Scroll View is taken an example, in a case that the electronic device switches from the Page View to the Scroll View and the user browses the presented plurality of second pages in the Scroll View, in response to receiving an expansion on the target page in the plurality of second pages, the electronic device performs the switching operation for page view again, thereby enabling the user to browse an information of a first page corresponding to the target second page in detail. It should be noted that, a process of switching from the second page view to the first page view is may be similar to a process of switching from the first page view to the second page view, these processes may achieve smooth switch based on the animator property.

Secondly, the operations may include: presenting the first page view and displaying a first page associated with the target second page in the first page view.

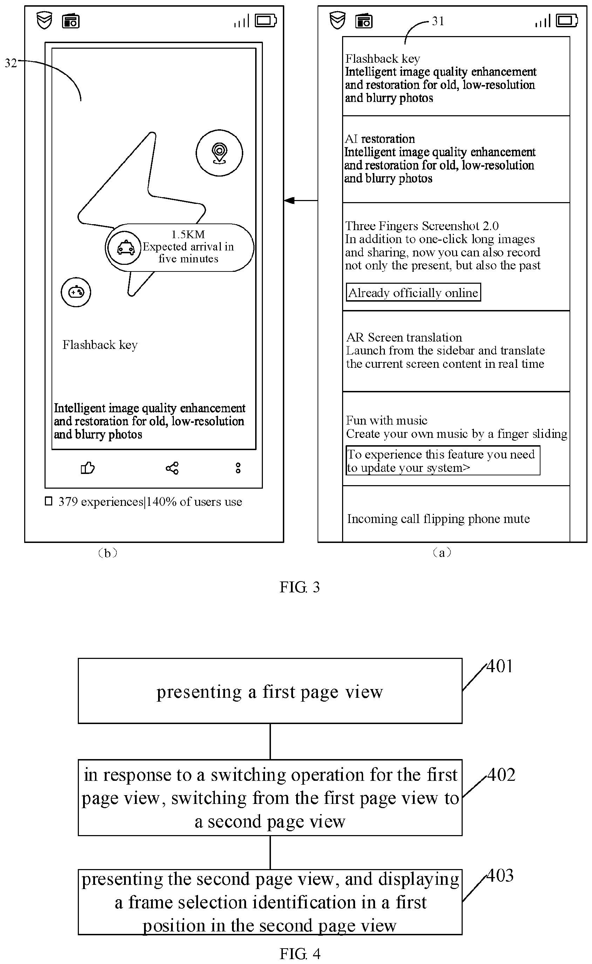

For example, as shown in an information display interface (a) of FIG. 3, in a case that the user browses the plurality of second pages displayed in the Scroll View, in response to receiving an expansion on the target second page of the plurality of second pages, such as a click operation for a second page 31 in a top position in the Scroll View, the electronic device performs the switching operation for page view again. At this time, the electronic device switches to a page view in an information display interface (b) of FIG. 3, such that in a Page View mode, the user can browse an information in first page 32 corresponding to target second page in detail.

It should be noted that, description of operations and content in this embodiment may refer same description of operations and content in other embodiments, which is not repeated.

An information display method performed by an electronic device is provided in some embodiments of the present disclosure. As shown in FIG. 4, the method may include following operations.

At operation 401, the method may include presenting a first page view.

The first page view includes at least one first page.

At operation 402, the method may include: in response to a switching operation for the first page view, switching from the first page view to a second page view.

The second page view includes at least one second page associated with the at least one first page.

At operation 403, the method may include: presenting the second page view, and displaying a frame selection identification in a first position in the second page view.

The frame selection identification is configured to indicate that a second page in the first position is in selected state. The number of pages displayed in the presented first page view may be different from the number of pages displayed in the presented second page view.

In some embodiments of the present disclosure, the frame selection identification may include but not limited to one of a color identification, a contour identification and/or a shape identification, and an identifying information identification. The identifying information identification may include an image identifying information identification and/or a character identifying information identification. The frame selection identification may be configured to distinguish a second page displayed in the first position in the second page view from other second pages. That is, the second page in the first position may be highlighted, thereby being conducive to vision positioning after switching a page view.

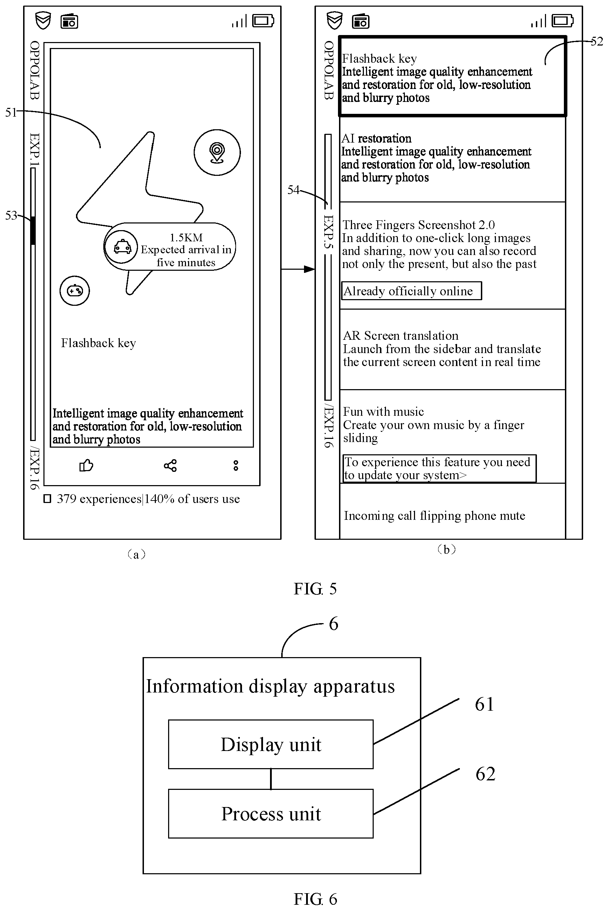

For example, as shown in an information display interface (a) of FIG. 5, in a case that the user browses a first page 51 corresponding to a flashback key displayed in the Page View, in response to receiving the switching operation for the Page View, the electronic device switches from the Page View to the Scroll View, and presents the Scroll View and displays a frame selection identification in a first position such as a top position in the Scroll View. As shown in an information display interface (b) of FIG. 5, a white box may be displayed in contour boundary of a second page 52 corresponding to the flashback key in the top position, which indicate that the second page 52 corresponding to the flashback key is in selected state.

In some embodiments of the present disclosure, the number of pages displayed in the presented second page view may be different from the number of pages displayed in the presented first page view. In a case that a first position in the second page view is different from a top position in the second page view, after the electronic device performs the operation 403 of presenting the second page view, and displaying a frame selection identification in a first position in the second page view, the electronic device may perform following operations.

The operations may include: in response to a page turning operation for the plurality of second pages in the second page view, moving the plurality of second pages, and displaying a frame selection identification in a third position in the second page view.

The frame selection identification may be configured to indicate that the second page in the third position is in a selected state.

In response to the page turning operation for the plurality of second pages in the second page view, the electronic device moves the plurality of second pages, and presents the frame selection identification in the third position in the second page view. That is, the electronic device simultaneously moves the plurality of pages and a position of the white box to achieve selecting operations on different second pages.

In some embodiments of the present disclosure, the frame selection identification and the selected second page may have same contour boundaries. After the electronic device perform the operation of displaying the frame selection identification in the third position in the second page view, the electronic device may perform following operations.

The operations may include: determining the third position as a top position or a bottom position in the second page view, receiving the page turning operation, and keeping a position of frame selection identification in the second page view unchanged.

In a process of the electronic device moving the white box, when the white box has aligned with the top position or the bottom position of the second page view, the electronic device keep the frame selection identification in the second page view unchanged even if the electronic device receives the page turning operation. That is, although the plurality of second pages are moved, the position of the frame selection identification does not change, thereby avoiding background flicker and improving vision experience.

In other embodiments of the present disclosure, a first display control may be displayed in the first page view, and the first display control may be configured to change a first page displayed in a second position in the first page view.

A second display control may be displayed in the second page view, and the second display control may be configured to change a second page displayed in a first position in the second page view.

A position of the first control in the first page view and a position of the second control in the second page view may have a mapping relationship, the first page displayed in the second position and the second page displayed in the first position may have an association relationship.

The first control may be same as the second control, or the first control may be different from the second control.

For example, the first control being different from the second control is taken as an example, as shown in an information display interface (a) of FIG. 5, the first control is a sliding control 53 of the Scroll list. As shown in an information display interface (b) of FIG. 5, the second control is a sliding bar 54 of the Scroll list. A position of the sliding control 53 in the Scroll list and a position of the sliding bar 54 in the Scroll list have a mapping relationship. For example, the position of the sliding control 53 in the Scroll list indicates position of first page 51 in a plurality of first pages, the first page 51 is corresponding to a flashback key displayed in the Page View. The position of the sliding bar 54 in the Scroll list indicates position of second page 52 in a plurality of second pages, the second page 52 is corresponding to a flashback key. An arrangement sequence of the plurality first pages in the first page view and an arrangement sequence of the plurality second pages in the second page view are same.

In a practical application, for example, the electronic device may default that a page view is Page View when the page view is browsed. At this time, the electronic device may make the best of whole screen region to introduce contents and load various operations. In the Page View mode, the user may slide and switch contents of a whole page, and the electronic device may switch to a next page, a sidebar on the left of the Page View interface may simultaneously be slid down, which indicates which option a current option is in the whole page and imply that the user can operate. Further, the user may long press or slide the sidebar on the left of the Page View, such that the Page View switches to the Scroll View, and the Scroll View interface displays a continuously slidable Scroll list. At this time, compared with a page displayed in the Page View, a page displayed in the Scroll Page may be omitted a cover image and some operation controls. A white box in the Scroll Page may indicate a current selected option. When the user keeps the sidebar pressed and slides up and down, the user can quickly browse the continuously slidable Scroll list. In response to the user releasing the sidebar, the electronic device confirms selecting, the continuously slidable Scroll list expands in an animated manner and switches back to a page which can be browsed by turning in the Page View, presented contents is a selected option. A view separation mode may be applied to a selected state, that is, a Recycler View in a bottom may be separated from a white box view, such that the background flicker can be solved, thereby providing the user natural experience. An attribute of a Recycler View Item is modified when a page is turned, thereby causing the background flicker.

In a process of avoiding the background flicker, when the electronic device enters a sliding page, the electronic device calculates a position of the selected option in the screen, and then move the white box to a position of an item, enable the white box to overlap with the item. Then the electronic device performs a corresponding position operation according to a sliding tendency of the user. In response to a distance between the selected option and a top or a bottom of the screen being less than a height of a next page, the selected option is aligned with the top or the bottom. In response to the white box having been aligned with the top, the position of the white box is kept unchanged even if the user slides up. In response to the white box having been aligned with the bottom, the position of the white box is kept unchanged even if the user slides down.

Based on description mentioned above, the page which can be browsed by turning in the Page View can present contents in the default browse mode. A browse manner of the Scroll Page can ensure an efficiency of quick browse. In addition, a transition amination displayed in a process of a switch between the Page View and the Scroll Page can ensure that the user does not feel defocusing. It can be seen that, in the present disclosure, by sliding the sidebar, the Page View and the Scroll list are two different browse manners with different emphases. Switching the page which can be browsed by turning in the Page View and the continuously slidable Scroll list can present contents in best manner according to user requirement.

An information display apparatus is provided in some embodiments of the present disclosure, the information display apparatus can be applied to the information methods in embodiments corresponding to FIGS. 1, 2, and 4. As shown in FIG. 6, an information display apparatus 6 may include following units.

The information display apparatus 6 may include a display unit 61 configured to present a first page view, the first page view includes at least one first page.

The information display apparatus 6 may include a process unit 62 configured to: in response to a switching operation for the first page view, control the information display apparatus 6 to switch from the first page view to a second page view, the second page view includes at least one second page associated with the at least one first page.

The display unit 61 may also be configured to present the second page view, the number of pages presented on the second page view may be different from the number of pages presented on the first page view.

In other embodiments of the present disclosure, the process unit 62 may also be configured to: in response to the switching operation, acquire an image set, the image set include a multi-frame image acquired by converting the at least one first page to the at least one second page. The display unit 61 may also be configured to: preview the image set, and switch to the second page view when finishing previewing a last frame image in the image set.

In other embodiments of the present disclosure, the process unit 62 may also be configured to: in response to the switching operation, zoom a at least one first page, and simultaneously move the zoomed at least one first page to acquire the image set.

The at least one second page is the zoomed at least one first page, the zoomed first page may include some elements of the first page before zooming, or the first page before zooming may include some elements of the zoomed first page.

In other embodiments, the zoomed first page may include some elements of the first page before zooming, the process unit 62 may also be configured to: in response to an expansion operation for a target second page in the plurality of second pages, switch from the second page view to the first page view.

The display unit 61 may also be configured to: present the first page view and display the first page associated with the target second page in the first page view.

In other embodiments of the present disclosure, a first position in the presented second page view is configured to display the target second page, a candidate position in the presented second page view may be configured to display a candidate second page. The candidate second page may include pages different from the target second page in the plurality of the second pages.

The target second page in the plurality of the second pages may be a page associated with the first page displayed in a second position in the first page view before switching.

The larger an associated coefficient between the candidate second page and the target second page is, the smaller a distance between the candidate position corresponding to the candidate second page and the first position is.

In other embodiments of the present disclosure, the display unit 61 may also be configured to: present the second page view, and display a frame selection identification in the first position in the second page view, the frame selection identification may be configured to indicate that the second page in the first position is in a selected state.

In other embodiments of the present disclosure, the number of pages displayed in the presented second page view may be more than the number of pages displayed in the presented first page view, the first position in the second page view is different from a top position in the second page view.

The process unit 62 may also be configured to: in response to a page turning operation for the plurality of second pages in the second page view, move the plurality of second pages. The display unit 61 may also be configured to: display the frame selection identification in a third position in the second page view. The frame selection identification may be configured to indicate that the second page in the third position is in a selected state.

In other embodiments of the present disclosure, the frame selection identification and the selected second page may have same contour boundaries. The process unit 62 may also be configured to: determine the third position as a top position or a bottom position in the second page view, receive the page turning operation, and keep the position of the frame selection identification in the second page view unchanged.

In the embodiments of the present disclosure, a first control is displayed in the first page view, and the first control may be configured to change the first page displayed in the second position in the first page view.

A second control is displayed in the second page view, and the second control may be configured to change the second page displayed in the first position in the second page view.

A position of the first control in the first page view and a position of the second control in the second page view may have a mapping relationship, and the first page displayed in the second position and the second page displayed in the first position may have an association relationship.

It should be noted that specific process of operations performed by various units in some embodiments of the present disclosure may refer to specific process of the information display method in the embodiments corresponding to FIGS. 1, 2 and 4, which is not repeated.

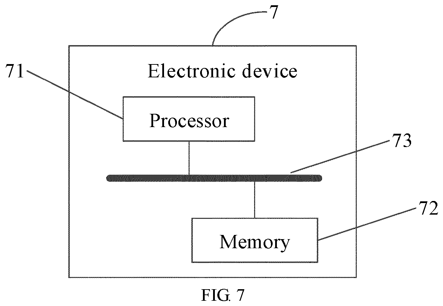

An electronic device is provided in some embodiments of the present disclosure. The electronic device may be applied to the information display method in the embodiments corresponding to FIGS. 1, 2 and 4. As shown in FIG. 7, the electronic device 7 (the electronic device 7 in FIG. 7 is correspond to the information display apparatus 6) may include: a processor 71, a memory 72, and a communication bus 73.

The communication bus 73 may be configured to achieve a communication connection between the processor 71 and the memory 72.

The processor 71 may be configured to execute an information display program stored in the memory 72 to perform following operations.

The operations may include: present a first page view, the first page view may include at least one first page.

The operations may include: in response to a switching operation for the first page view, switch from the first page view to a second page view, and the second page view includes at least one second page associated with the at least one first page.

The operations may include: present the second page view, the number of pages presented on the first page view may be different from the number of pages presented on the second page view.

In other embodiments of the present disclosure, the processor 71 may be configured to execute an information display program stored in the memory 72 to perform following operations.

The operations may include: in response to a switching operation, acquiring an image set. The image set may include a multi-frame image acquired by converting the at least one first page to the at least one second page.

The operations may include: previewing the image set, determining finishing previewing the last fame image of the image, and switching and presenting the second page view.

In other embodiments of the present disclosure, the processor 71 may be configured to execute an information display program stored in the memory 72 to perform following operations.

The operations may include: in response to the switching operation, zooming the at least one page, and simultaneously moving the zoomed at least one page to acquire the image set.

At least one second page may be the zoomed at least one page, the zoomed first page may include some elements of the first page before zooming, or the first page before zooming may include some elements of the zoomed first page.

In other embodiments of the present disclosure, the zoomed first page may include some elements of the first page before zooming, the processor 71 may be configured to execute an information display program stored in the memory 72 to perform following operations.

The operations may include: in response to an expansion operation for a target second page in the plurality of the second pages, switching from the second page view to the first page view.

The operations may include: presenting the first page view and displaying the first page associated with the target second page in the first page view.

In other embodiments of the present disclosure, a first position in the presented second page view is configured to display the target second page, a candidate position in the presented second page view may be configured to display a candidate second page. The candidate second page may include pages different from the target second page in the plurality of the second pages.

The target second page in the plurality of the second pages may be a page associated with the first page displayed in a second position in the first page view before switching.

The larger an associated coefficient between the candidate second page and the target second page is, the smaller a distance between the candidate position corresponding to the candidate second page and the first position is.

In other embodiments of the present disclosure, the processor 71 may be configured to execute an information display program stored in the memory 72 to perform following operations.

The operations may include: presenting the second page view, and displaying a frame selection identification in the first position in the second page view, the frame selection identification may be configured to indicate that the second page in the first position is in a selected state.

In other embodiments of the present disclosure, the number of pages displayed in the presented second page view may be more than the number of pages displayed in the presented first page view, the first position in the second page view is different from a top position in the second page view. The processor 71 may be configured to execute an information display program stored in the memory 72 to perform following operations.

The operations may include: in response to a page turning operation for the plurality of second pages in the second page view, moving the plurality of second pages, displaying the frame selection identification in a third position in the second page view. The frame selection identification may be configured to indicate that the second page in the third position is in a selected state.

In other embodiments of the present disclosure, the frame selection identification and the selected second page may have same contour boundaries. The processor 71 may be configured to execute an information display program stored in the memory 72 to perform following operation: determining the third position as a top position or a bottom position in the second page view, receiving the page turning operation, and keeping the position of the frame selection identification in the second page view unchanged.

In other embodiments of the present disclosure, a first control is displayed in the first page view, and the first control may be configured to change the first page displayed in the second position in the first page view.

A second control is displayed in the second page view, and the second control may be configured to change the second page displayed in the first position in the second page view.

A position of the first control in the first page view and a position of the second control in the second page view may have a mapping relationship, and the first page displayed in the second position and the second page displayed in the first position may have an association relationship.

It should be noted that specific process of operations performed by the processor in some embodiments of the present disclosure may refer to specific process of the information display method in the embodiments corresponding to FIGS. 1, 2 and 4, which is not repeated.

A computer-readable storage medium is provided in some embodiments of the present disclosure, the computer-readable storage medium may store one or more programs, the one or more programs may be executed by one or more processors to perform a specific process of the information display method in the embodiments corresponding to FIGS. 1, 2 and 4, which is not repeated.

As an example, the processor may be an integrated circuit chip with signal processing capability, such as a general-purpose processor, a digital signal processor (DSP), or other programmable logic device, discrete gate or transistor logic device, discrete hardware component, etc., the general-purpose processor may be a microprocessor or any conventional processor, etc.

Those skilled in the art should understand that embodiments of the present disclosure may provide methods, systems, or computer program products. Accordingly, the present disclosure may take a form of a hardware embodiment, a software embodiment, or an embodiment combining a software and a hardware. Further, the present disclosure may take a form of a computer program product executed on one or more computer-readable storage media (including but not limited to a disk memory and an optical memory, etc.) containing computer-readable program code.

The present disclosure is described with reference to flowcharts and/or block diagrams of methods, devices (systems), and computer program products according to the embodiments of the present disclosure. It should be understood that each of processes and/or blocks in flowcharts and/or block diagrams, and the combination of the processes and/or blocks in the flowcharts and/or block diagrams may be implemented by computer program instructions. These computer program instructions may be provided to a processor of a general purpose computer, a specialized computer, an embedded processor, or other programmable data processing device to produce a machine such that the instructions executed by the processor of the computer or other programmable data processing device produce a device for implementing functions specified in one or more processes in the flowchart and/or one or more blocks in the block diagram.

The computer program instructions may also be stored in a computer-readable memory capable of directing a computer or other programmable data processing device to operate in a particular manner, such that instructions stored in the computer-readable memory produce a product including an instruction device that implements the functions specified in one or more processes in the flowchart and/or one or more blocks in the block diagram.

The computer program instructions may also be loaded onto a computer or other programmable data processing device such that a series of operational steps are performed on the computer or other programmable device to produce computer-implemented processing such that the instructions executed on the computer or other programmable device provide steps for implementing the functions specified in one or more processes in the flowchart and/or one or more blocks in the block diagram.

Description mentioned above is only a better example of the present disclosure and is not intended to limit the scope of protection of the present disclosure.

### Industrial practicality

An information display method, an electronic device and a storage medium are provided in embodiments of the present disclosure. The method includes: Presenting a first page view, the first page view includes at least one first page. In response to a switching operation for the first page view, switching from the first page view to a second page view, the second page view includes at least one second page associated with the at least one first page. Presenting the second page view, the number of pages displayed in the presented second page view is different from the number of pages displayed in the presented first page view. The method can solve at least one problem in the related art that a browse mode is single and can not satisfied with a need of the user, thereby causing a bad browse effect. The method can achieve instantly switch between page views including different number of pages based on the switching operation for page view. That is, a flexible switching between different browse modes can satisfy a browse need of the user, improve visual experience, and increase browse efficiency.

## Claims

1. An information display method, comprising:
presenting a first page view, the first page view comprising at least one first page;
in response to a switching operation for the first page view, switching from the first page view to a second page view, the second page view comprising at least one second page associated with the at least one first page;
presenting the second page view, the number of pages displayed in the presented second page view being different from the number of pages displayed in the presented first page view.

2. The information display method as claimed in claim 1, wherein the in response to a switching operation for the first page view, switching from the first page view to a second page view comprises:
in response to the switching operation, acquiring an image set, the image set comprising a multi-frame image acquired by converting the at least one first page to the at least one second page;
previewing the image set, switching and presenting the second page view when finishing previewing a last frame image in the image set.

3. The information display method as claimed in claim 2, wherein the in response to the switching operation, acquiring an image set comprises:
in response to the switching operation, zooming the at least one first page, and simultaneously moving the zoomed at least one first page to acquire the image set;
wherein the at least one second page is the zoomed at least one first page, the zoomed first page comprises some elements of the first page before zooming, or the first page before zooming comprises some elements of the zoomed first page.

4. The information display method as claimed in claim 3, wherein the zoomed first page comprises some elements of the first page before zooming, and
after presenting the second page view, the method further comprises:
in response to an expansion operation for a target second page in a plurality of second pages, switching from the second page view to the first page view;
presenting the first page view and displaying the first page associated with the target second page in the first page view.

5. The information display method as claimed in any one of claims 1 to 4, wherein a first position in the presented second page view is configured to display the target second page, a candidate position in the presented second page view is configured to display a candidate second page, the candidate second page comprises pages different from the target second page in the plurality of second pages;
the target second page in the plurality of the second pages is a page associated with the first page displayed in a second position in the first page view before switching;
the larger an associated coefficient between the candidate second page and the target second page is, the smaller a distance between the candidate position corresponding to the candidate second page and the first position is.

6. The information display method as claimed in any one of claims 1 to 5, wherein the presenting the second page view comprises:
presenting the second page view, and displaying a frame selection identification in the first position in the second page view, wherein the frame selection identification is configured to indicate that the second page in the first position is in a selected state.

7. The information display method as claimed in claim 6, wherein the number of pages displayed in the presented second page view is more than the number of pages displayed in the presented first page view, the first position in the second page view is different from a top position in the second page view;
after presenting the second page view, the method further comprises:
in response to a page turning operation for the plurality of second pages in the second page view, moving the plurality of second pages, and displaying the frame selection identification in a third position in the second page view, wherein the frame selection identification is configured to indicate that the second page in the third position is in a selected state.

8. The information display method as claimed in claim 7, wherein the frame selection identification and the selected second page have same contour boundaries;
after the displaying the frame selection identification in a third position in the second page view, the method further comprises:
determining the third position as a top position or a bottom position in the second page view, receiving the page turning operation, and keeping a position of the frame selection identification in the second page view unchanged.

9. The information display method as claimed in any one of claims 1 to 8, wherein a first control is displayed in the first page view, and the first control is configured to change the first page displayed in the second position in the first page view;
a second control is displayed in the second page view, and the second control is configured to change the second page displayed in the first position in the second page view;
a position of the first control in the first page view and a position of the second control in the second page view have a mapping relationship, and the first page displayed in the second position and the second page displayed in the first position have an association relationship.

10. An information display apparatus, comprising:
a display unit, configured to present a first page view, the first page view comprising at least one first page; and
a process unit, configured to: in response to a switching operation for the first page view, switch from the first page view to a second page view, the second page view comprising at least one second page associated with the at least one first page;
wherein the display unit is further configured to present the second page view, the number of pages displayed in the presented second page view being different from the number of pages displayed in the presented first page view.

11. The information display apparatus as claimed in claim 10, wherein the process unit is further configured to: in response to the switching operation, acquire an image set, the image set comprises a multiple-frame image acquired by converting the at least one first page to the at least one second page;
the display unit is further configured to: preview the image set, switch and present the second page view when finishing previewing a last frame image in the image set.

12. The information display apparatus as claimed in claim 11, wherein the process unit is further configured to: in response to the switching operation, zoom the at least one first page, and simultaneously move the zoomed at least one first page to acquire the image set;
wherein the at least one second page is the zoomed at least one first page, the zoomed first page comprises some elements of the first page before zooming, or the first page before zooming comprises some elements of the zoomed first page.

13. The information display apparatus as claimed in claim 12, wherein the process unit is further configured to: in response to an expansion operation for a target second page in a plurality of second pages, switch from the second page view to the first page view;
the display unit is further configured to: present the first page view and display the first page associated with the target second page in the first page view.

14. The information display apparatus as claimed in any one of claims 10 to 13, wherein a first position in the presented second page view is configured to display the target second page, a candidate position in the presented second page view is configured to display a candidate second page, the candidate second page comprises a page different from the target second page in the plurality of the second pages;
the target second page in the plurality of the second pages is a page associated with the first page displayed in a second position in the first page view before switching;
the larger an associated coefficient between the candidate second page and the target second page is, the smaller a distance between the candidate position corresponding to the second page and the first position is.

15. The information display apparatus as claimed in any one of claims 10 to 14, wherein the display unit is further configured to: present the second page view, and display a frame selection identification in the first position in the second page view, wherein the frame selection identification is configured to indicate that the second page in the first position is in a selected state.

16. The information display apparatus as claimed in claim 15, wherein the number of pages displayed in the presented second page view is more than the number of pages displayed in the presented first page view, the first position in the second page view is different from a top position in the second page view;
the process unit is further configured to: in response to a page turning operation for the plurality of second pages in the second page view, move the plurality of second pages;
the display unit is configured to: display a frame selection identification in a third position in the second page view, wherein the frame selection identification is configured to indicate that the second page in the third position is in a selected state.

17. The information display apparatus as claimed in claim 16, wherein the frame selection identification and the selected second page have same contour boundaries, after displaying the frame selection identification in the third position in the second page view, the device further comprises:
determine the third position as a top position or a bottom position in the second page view, receive the page turning operation, and keep a position of the frame selection identification in the second page view unchanged.

18. The information display apparatus as claimed in any one of claims 10 to 17, wherein a first control is displayed in the first page view, and the first control is configured to change the first page displayed in the second position in the first page view;
a second control is displayed in the second page view, and the second control is configured to change the second page displayed in the first position in the second page view;
a position of the first control in the first page view and a position of the second control in the second page view have a mapping relationship, and the first page displayed in the second position and the second page displayed in the first position have an association relationship.

19. An electronic device, comprising a processor, a memory, and a communication bus; wherein
the communication bus is configured to achieve a communication connection between the processor and the memory; and
the processor is configured to execute an information display program stored in the memory to perform the operations of the information display method as claimed in any one of claims 1 to 9.

20. A storage medium, storing one or more programs, wherein the one or more programs are executed by one or more processors to perform the operations of the information display method as claimed in any one of claims 1 to 9.
